# EUROPÄISCHE PATENTSCHRIFT

(11) **EP 1 984 647 B1**
(45) Veröffentlichungstag und Bekanntmachung des Hinweises auf die Patenterteilung: **20.07.2016**
(21) Anmeldenummer: 06830625.7
(22) Anmeldetag: 14.12.2006
(51) Int. Cl.: F16F 9/05, B60G 11/26

(54) **LUFTFEDER MIT AUßENFÜHRUNG**
AIR SPRING HAVING AN EXTERNAL GUIDE
AMORTISSEUR PNEUMATIQUE À GUIDE EXTERNE

(30) Priorität: 07.02.2006 DE 102006005459
(43) Veröffentlichungstag der Anmeldung: 29.10.2008
(73) Patentinhaber: Continental Teves AG & Co. OHG, 60488 Frankfurt (DE)
(72) Erfinder: OLDENETTEL, Holger, 30900 Resse (DE)
(86) Internationale Anmeldenummer: PCT/EP2006/069710
(87) Internationale Veröffentlichungsnummer: WO 2007/090480

(56) Entgegenhaltungen:
- WO-A-00/41903
- WO-A-01/84010
- WO-A-02/064993
- DE-A1-102004 021 594
- US-A1- 2004 026 836
- US-B1- 6 422 543

## Beschreibung

Die Erfindung betrifft eine Luftfeder mit wenigstens den folgenden Bauteilen, nämlich einem Luftfederbalg aus elastomerem Material, einem Luftfederdeckel, einem Luftfederkolben und einer hülsenförmigen, den Luftfederbalg tangential umfassenden Außenführung, wobei der Luftfederbalg mit seinem ersten Ende am Luftfederdeckel und mit seinem zweiten Ende am Luftfederkolben luftdicht befestigt ist und zusammen mit dem Luftfederdeckel und dem Luftfederkolben eine volumenelastische Hohlkammer bildet, wobei die Luftfeder eine integrierte, lösbare, den Luftfederdeckel gegen den Luftfederkolben festlegende Transportsicherung aufweist.

Luftfedern der beschriebenen Art werden häufig in Straßen- oder Schienenfahrzeugen eingesetzt, um eine komfortable Federung zu erreichen. Die Luftfeder steht im Betrieb unter einem inneren Überdruck. Der Luftfederbalg rollt bei Federbewegungen unter Bildung einer Rollfalte auf der Außenkontur des Luftfederkolbens ab. In drucklosem Zustand bildet sich eine derartige Rollfalte nicht oder nur sehr schwer aus. Wird die Luftfeder im drucklosen Zustand zusammengedrückt, was beispielsweise zum Versand der Luftfeder erforderlich sein kann, kann es zu unkontrollierter Faltenbildung des Luftfederbalges kommen. Setzen sich diese Falten nach innen zwischen den Luftfederdeckel und den Luftfederkolben, kann die Luftfeder nicht genügend zusammengedrückt werden. Außerdem kann der Balg beschädigt werden.

Bei PKW-Luftfedern werden durch den Einsatz von Außenführungen deutliche Vorteile hinsichtlich Lebensdauer und Komfort erzielt. Dabei ist es jedoch erforderlich, dass die Luftfeder vorbefüllt ausgeliefert wird, da bei druckloser Auslieferung Kolben, Deckel und Außenführung gegeneinander verschoben werden können und es zu unkontrollierter Faltenbildung des Balges kommt, wodurch der Balg beschädigt werden kann.

In der DE 197 53 637 A1 ist eine Luftfeder offenbart, die zusätzlich zu den eingangs genannten Bauteilen mit einem Stoßdämpfer gekoppelt ist und ein Federbein bildet. Durch den Stoßdämpfer sind Luftfederdeckel und Luftfederkolben axial gegeneinander geführt. Dadurch ist die Gefahr der Faltenbildung in drucklosem Zustand gering. Da die Außenführung am Luftfederdeckel befestigt ist, bleibt auch eine korrekte Lage der Bauteile zueinander im drucklosen Zustand erhalten. Diese Vorteile bestehen jedoch nur für den Fall der eingeschränkten Beweglichkeit der Luftfeder quer zur Einfederungsrichtung, wie sie in einem Federbein gegeben ist.

In der WO 01/84010A1 ist eine Luftfeder der eingangs geschilderten Art offenbart, bei der diese Art der Führung nicht gegeben ist. Luftfederdeckel und Luftfederkolben sind in drucklosem Zustand im Rahmen der Elastizität des Luftfederbalges frei, also auch quer zur Hauptfederrichtung gegeneinander verschieblich. Deshalb besteht hier die genannte Gefahr, dass die Luftfeder im drucklosen Zustand beschädigt werden kann. Entweder mussdie Luftfeder also mit einem Restinnendruck verpackt werden, was die Gefahr birgt, dass sich die Luftfeder auf dem Transport wieder entfaltet, die Verpackung beschädigt und für den Einbau nicht mehr die geeignete Form aufweist, oder die Luftfeder muss mit von Außen aufgesetzten Haltemechanismen verpackt werden, was einen erheblichen Zusatzaufwand mit sich bringt. Außerdem ist nicht auszuschließen, dass sich die Außenführung gegen den Luftfederbalg während des Transportes verschiebt, da eine Lagesicherung nicht vorhanden ist. Dies führt bei der Montage der Luftfeder in ein Fahrzeug zu zusätzlichen Justagearbeiten.

Um die Verpackung der Luftfeder im drucklosen Zustand zu ermöglichen, wurden Transportsicherungen vorgeschlagen, die dafür sorgen, dass die drucklose Luftfeder während des Transportes und der Lagerung eingefaltet bleibt. Eine solche Luftfeder ist in der US 6 422 543 B1 offenbart. Bei dieser Luftfeder ist die Transportsicherung aber nur durch Beaufschlagung mit Druckluft wieder lösbar.

Der Erfindung liegt die Aufgabe zugrunde, eine Luftfeder der eingangs geschilderten Art so zu verbessern, dass die Gefahr der unkontrollierten Faltenbildung im drucklosen Zustand minimiert ist und eine problemlose Entfaltung zur Montage möglich ist..

Diese Aufgabe wird dadurch gelöst, dass die Transportsicherung als lösbare, einrastende Clip-Verbindung ausgeführt ist.

Die Aufgabe wird weiters dadurch gelöst, dass die Transportsicherung als lösbare, bajonettverschlussartige Verbindung ausgeführt ist.

Die Aufgabe wird weiters dadurch gelöst, dass die Transportsicherung als lösbarer, selbsthemmender Kegelsitz ausgeführt ist.

Die Aufgabe wird weiters dadurch gelöst, dass die Transportsicherung als Magnetverbindung ausgeführt ist.

Derartige lösbare Verbindungen ermöglichen eine besonders einfache Montage, da keine gesonderten Vorrichtungen erforderlich sind. Luftfederkolben und Luftfederdeckel rasten im Herstellprozess durch das Einfalten der Luftfeder ein und lassen sich auch ohne die Anwendung spezieller Werkzeuge beim Einbau in ein Fahrzeug wieder lösen.

Eine derartige Transportsicherung ermöglicht eine drucklose Verpackung und Lagerung der Luftfeder, da Luftfederdeckel und Luftfederkolben in einer definierten Lage zueinander festgelegt sind. Der Balg kann keine unkontrollierten Falten werfen und ist auf einfache Weise ohne Druckluft oder besondere Werkzeuge wieder entfaltbar.

Die definierte Lage des Luftfederbalges lässt sich beispielsweise im Fertigungsprozess durch ein kontrolliertes Einfalten der Luftfeder unter Innendruck erzielen. Der Innendruck kann dann nach Wirksamwerden der Transportsicherung vollständig abgelassen werden.

In einer Weiterbildung der Erfindung ist der Luftfederdeckel aus zwei Teilen aufgebaut, wobei das erste Teil dem Luftfederbalg zugeordnet ist und das zweite, zu dem ersten Teil eine korrespondierende Form aufweisende Teil mit dem ersten Teil mittels einer Schicht aus Elastomermaterial, vorzugsweise aus Gummi fest verbunden ist.

Diese Anordnung hat den Vorteil, dass der Luftfederbalg sowohl im Betrieb als auch in drucklosem Zustand vor Torsionsbelastung geschützt ist, nach der Montage aber nicht mehr versehentlich verdrehbar ist.

Die Erfindung ermöglicht, dass die Luftfeder in drucklosem Zustand auslieferbar ist. Damit ist es auch möglich, Luftfedern, die nicht als Federbein ausgebildet sind, mit Außenführung auszuführen und auszuliefern. Die genannten Vorteile der Außenführung sind durch die Erfindung daher auch für frei abrollende Luftfedern nutzbar.

Anhand der Zeichnung wird nachstehend ein Beispiel der Erfindung näher erläutert. Es zeigt
Fig. 1 einen Längsschnitt einer erfindungsgemäßen Luftfeder in druckbeaufschlagtem Zustand und
Fig. 2 die erfindungsgemäße Luftfeder mit eingerasteter Transportsicherung.

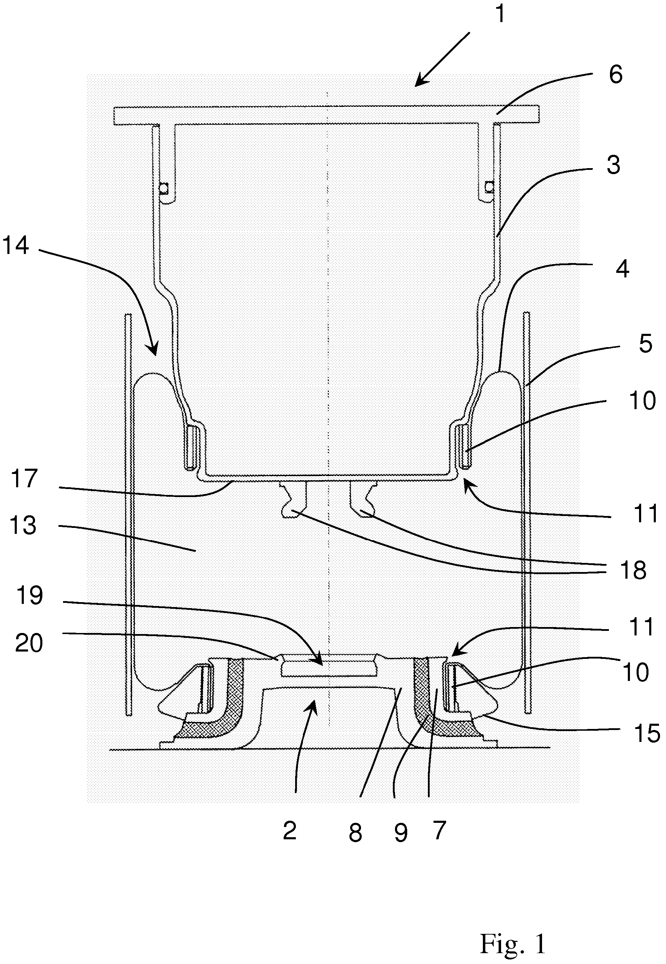

In der Figur 1 ist eine erfindungsgemäße Luftfeder 1 gezeigt, die einen Luftfederdeckel 2, einen Luftfederkolben 3 und einen Luftfederbalg 4 aufweist. Der Luftfederbalg 4 ist von einer hülsenförmigen Außenführung 5 umschlossen.

Der Luftfederdeckel 2 ist zweiteilig aufgebaut und weist einen Innenkonus 7 und ein Basisteil 8 auf, die durch eine Gummischicht 9 fest miteinander zusammenvulkanisiert sind.

Der Luftfederbalg 4 ist mit Klemmringen 10 jeweils auf Klemmsitzen 11 des Luftfederkolbens 3 und des Innenkonus 7 des Luftfederdeckels 2 luftdicht verpresst und bildet zwischen Luftfederkolben 3 und Luftfederdeckel 2 einen volumenelastischen Hohlraum 13, der mit einem Überdruck beaufschlagbar ist. Dieser Überdruck sorgt dafür, dass der Luftfederbalg 4 eine Rollfalte 14 bildet, die bei axialen Relativbewegungen von Luftfederkolben 4 und Luftfederdeckel 2 auf dem Luftfederkolben abrollt. Deckelseitig wird der Luftfederbalg 4 durch einen Stützring 15 gestützt, so dass er nicht zu stark über den Luftfederdeckel 2 abrollt. Der Überdruck im Hohlraum 13 presst außerdem den Luftfederbalg 4 von Innen gegen die Außenführung 5. Der Luftfederbalg 4 wird dadurch gestützt, so dass seine radiale Ausdehnung das durch die Außenführung 5 vorgegebene und die Federcharakteristik mit bestimmende Maß nicht überschreitet.

Auf der dem Luftfederdeckel 2 zugewandten Stirnseite 17 des Luftfederkolbens 3 sind zwei hakenförmige elastische Rastclips 18 befestigt, die über die Stirnseite 17 hinausragen und deren Haken voneinander weg weisen. Korrespondierend zu den Rastclips weist das Basisteil 8 des Luftfederdeckels 2 eine Vertiefung 19 auf. In die Öffnung der Vertiefung 19 ragt eine ringförmige Rastnut 20 radial nach innen weisend hinein, so dass sich ein Hinterschnitt bildet, in den die hakenförmigen Rastclips 18 des Luftfederkolbens 3 einrastbar sind.

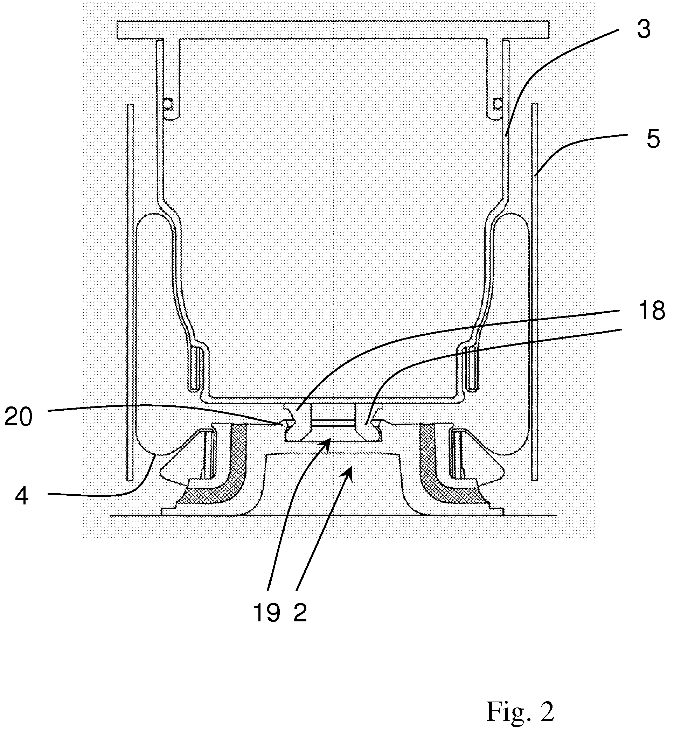

In der Figur 2 ist die Luftfeder 1 in eingerasteten Zustand gezeigt. Die Luftfeder 1 wurde noch in druckbeaufschlagtem Zustand derart eingefaltet, dass der Luftfederkolben 3 auf dem Luftfederdeckel 2 aufsitzt. Dabei sind die Rastclips 18 in die Vertiefung 19 des Basisteils eingedrungen und hinter der Rastnut 20 eingerastet. Luftfederkolben 3 und Luftfederdeckel 2 sind nun nicht mehr frei beweglich und lassen sich nur durch Überwindung eines Widerstandes voneinander lösen. Auf diese Weise wird eine unkontrollierte Faltenbildung des Luftfederbalges 4 verhindert, der Luftfederbalg 4 kann nicht zwischen Luftfederdeckel 2 und Luftfederkolben 3 eingeklemmt werden. Nach dem Einrasten der Halteclips 18 kann der Innendruck im Hohlraum 13 abgelassen werden.

Der Luftfederbalg 4 hat aufgrund seiner Steifigkeit das Bestreben, sich nach außen auszubeulen. Dies wird durch die Außenführung 5 begrenzt. Die Außenführung 5 wird durch die dabei entstehende Reibung zwischen Luftfederbalg 4 und Außenführung 5 in Position gehalten

## Patentansprüche

1. Luftfeder (1) mit wenigstens den folgenden Bauteilen, nämlich einem Luftfederbalg (4) aus elastomerem Material, einem Luftfederdeckel (2), einem Luftfederkolben (3) und einer hülsenförmigen, den Luftfederbalg (4) tangential umfassenden Außenführung (5), wobei der Luftfederbalg (4) mit seinem ersten Ende am Luftfederdeckel (2) und mit seinem zweiten Ende am Luftfederkolben (3) luftdicht befestigt ist und zusammen mit dem Luftfederdeckel (2) und dem Luftfederkolben (3) eine volumenelastische Hohlkammer (13) bildet, wobei die Luftfeder (1) eine integrierte, lösbare, den Luftfederdeckel (2) gegen den Luftfederkolben (3) festlegende Transportsicherung (18, 19, 20) aufweist,
**dadurch gekennzeichnet, dass** die Transportsicherung (18, 19, 20) als lösbare, einrastende Clip-Verbindung ausgeführt ist.

2. Luftfeder (1) mit wenigstens den folgenden Bauteilen, nämlich einem Luftfederbalg (4) aus elastomerem Material, einem Luftfederdeckel (2), einem Luftfederkolben (3) und einer hülsenförmigen, den Luftfederbalg (4) tangential umfassenden Außenführung (5), wobei der Luftfederbalg (4) mit seinem ersten Ende am Luftfederdeckel (2) und mit seinem zweiten Ende am Luftfederkolben (3) luftdicht befestigt ist und zusammen mit dem Luftfederdeckel (2) und dem Luftfederkolben (3) eine volumenelastische Hohlkammer (13) bildet, wobei die Luftfeder (1) eine integrierte, lösbare, den Luftfederdeckel (2) gegen den Luftfederkolben (3) festlegende Transportsicherung (18, 19, 20) aufweist,
**dadurch gekennzeichnet, dass** die Transportsicherung (18, 19, 20) als lösbare, bajonettverschlussartige Verbindung ausgeführt ist.

3. Luftfeder (1) mit wenigstens den folgenden Bauteilen, nämlich einem Luftfederbalg (4) aus elastomerem Material, einem Luftfederdeckel (2), einem Luftfederkolben (3) und einer hülsenförmigen, den Luftfederbalg (4) tangential umfassenden Außenführung (5), wobei der Luftfederbalg (4) mit seinem ersten Ende am Luftfederdeckel (2) und mit seinem zweiten Ende am Luftfederkolben (3) luftdicht befestigt ist und zusammen mit dem Luftfederdeckel (2) und dem Luftfederkolben (3) eine volumenelastische Hohlkammer (13) bildet, wobei die Luftfeder (1) eine integrierte, lösbare, den Luftfederdeckel (2) gegen den Luftfederkolben (3) festlegende Transportsicherung (18, 19, 20) aufweist,
**dadurch gekennzeichnet, dass** die Transportsicherung als lösbarer, selbsthemmender Kegelsitz ausgeführt ist.

4. Luftfeder (1) mit wenigstens den folgenden Bauteilen, nämlich einem Luftfederbalg (4) aus elastomerem Material, einem Luftfederdeckel (2), einem Luftfederkolben (3) und einer hülsenförmigen, den Luftfederbalg (4) tangential umfassenden Außenführung (5), wobei der Luftfederbalg (4) mit seinem ersten Ende am Luftfederdeckel (2) und mit seinem zweiten Ende am Luftfederkolben (3) luftdicht befestigt ist und zusammen mit dem Luftfederdeckel (2) und dem Luftfederkolben (3) eine volumenelastische Hohlkammer (13) bildet, wobei die Luftfeder (1) eine integrierte, lösbare, den Luftfederdeckel (2) gegen den Luftfederkolben (3) festlegende Transportsicherung (18, 19, 20) aufweist,
**dadurch gekennzeichnet, dass** die Transportsicherung als Magnetverbindung ausgeführt ist.

5. Luftfeder nach mindestens einem der vorhergehenden Ansprüche, **dadurch gekennzeichnet, dass** der Luftfederdeckel (2) aus zwei Teilen (7, 8) aufgebaut ist, wobei das erste Teil (7) dem Luftfederbalg (4) zugeordnet ist und das zweite, zu dem ersten Teil eine korrespondierende Form aufweisende Teil (8) mit dem ersten Teil (7) mittels einer Schicht (9) aus Elastomermaterial, vorzugsweise aus Gummi fest verbunden ist.

## Claims

1. Air spring (1) comprising at least the following components, specifically an air spring bellows (4) which is composed of an elastomeric material, an air spring cover (2), an air spring piston (3) and a sleeve-like outer guide (5) which encloses the air spring bellows (4) in a tangential manner, wherein the air spring bellows (4), by way of its first end, is fastened in an air-tight manner to the air spring cover (2) and, by way of its second end, is fastened in an air-tight manner to the air spring piston (3) and forms an elastic-volume hollow chamber (13) together with the air spring cover (2) and the air spring piston (3), wherein the air spring (1) has an integrated and releasable transport securing means (18, 19, 20) which fixes the air spring cover (2) against the air spring piston (3), **characterized in that** the transport securing means (18, 19, 20) is designed as a releasable, latching clip connection.

2. Air spring (1) comprising at least the following components, specifically an air spring bellows (4) which is composed of an elastomeric material, an air spring cover (2), an air spring piston (3) and a sleeve-like outer guide (5) which encloses the air spring bellows (4) in a tangential manner, wherein the air spring bellows (4), by way of its first end, is fastened in an air-tight manner to the air spring cover (2) and, by way of its second end, is fastened in an air-tight manner to the air spring piston (3) and forms an elastic-volume hollow chamber (13) together with the air spring cover (2) and the air spring piston (3), wherein the air spring (1) has an integrated and releasable transport securing means (18, 19, 20) which fixes the air spring cover (2) against the air spring piston (3), **characterized in that** the transport securing means (18, 19, 20) is designed as a releasable connection in the form of a bayonet fitting.

3. Air spring (1) comprising at least the following components, specifically an air spring bellows (4) which is composed of an elastomeric material, an air spring cover (2), an air spring piston (3) and a sleeve-like outer guide (5) which encloses the air spring bellows (4) in a tangential manner, wherein the air spring bellows (4), by way of its first end, is fastened in an air-tight manner to the air spring cover (2) and, by way of its second end, is fastened in an air-tight manner to the air spring piston (3) and forms an elastic-volume hollow chamber (13) together with the air spring cover (2) and the air spring piston (3), wherein the air spring (1) has an integrated and releasable transport securing means (18, 19, 20) which fixes the air spring cover (2) against the air spring piston (3), **characterized in that** the transport securing means is designed as a releasable self-locking conical seat.

4. Air spring (1) comprising at least the following components, specifically an air spring bellows (4) which is composed of an elastomeric material, an air spring cover (2), an air spring piston (3) and a sleeve-like outer guide (5) which encloses the air spring bellows (4) in a tangential manner, wherein the air spring bellows (4), by way of its first end, is fastened in an air-tight manner to the air spring cover (2) and, by way of its second end, is fastened in an air-tight manner to the air spring piston (3) and forms an elastic-volume hollow chamber (13) together with the air spring cover (2) and the air spring piston (3), wherein the air spring (1) has an integrated and releasable transport securing means (18, 19, 20) which fixes the air spring cover (2) against the air spring piston (3), **characterized in that** the transport securing means is designed as a magnetic connection.

5. Air spring according to at least one of the preceding claims, **characterized in that** the air spring cover (2) is constructed from two parts (7, 8), wherein the first part (7) is associated with the air spring bellows (4) and the second part (8), which has a corresponding shape to the first part, is fixedly connected to the first part (7) by means of a layer (9) of elastomeric material, preferably of rubber.

## Revendications

1. Amortisseur pneumatique (1) avec au moins les composants suivants, notamment un soufflet d'amortisseur pneumatique (4) en matière élastomère, un cache d'amortisseur pneumatique (2), un piston d'amortisseur pneumatique (3) et un guide externe (5) en forme de fourreau, contenant tangentiellement le soufflet d'amortisseur pneumatique (4), le soufflet d'amortisseur pneumatique (4) étant fixé de façon étanche à l'air au cache d'amortisseur pneumatique (2) avec sa première extrémité et au piston d'amortisseur pneumatique (3) avec sa deuxième extrémité et formant une chambre creuse de volume élastique (13) conjointement avec le cache d'amortisseur pneumatique (2) et le piston d'amortisseur pneumatique (3), l'amortisseur pneumatique (1) comportant une sécurité de transport (18, 19, 20) intégrée, amovible, fixant le cache d'amortisseur pneumatique (2) contre le piston d'amortisseur pneumatique (3), **caractérisé en ce que** la sécurité de transport (18, 19, 20) est réalisée sous la forme d'une liaison clipsée amovible pouvant s'encliqueter.

2. Amortisseur pneumatique (1) avec au moins les composants suivants, notamment un soufflet d'amortisseur pneumatique (4) en matière élastomère, un cache d'amortisseur pneumatique (2), un piston d'amortisseur pneumatique (3) et un guide externe (5) en forme de fourreau, contenant tangentiellement le soufflet d'amortisseur pneumatique (4), le soufflet d'amortisseur pneumatique (4) étant fixé de façon étanche à l'air au cache d'amortisseur pneumatique (2) avec sa première extrémité et au piston d'amortisseur pneumatique (3) avec sa deuxième extrémité et formant une chambre creuse de volume élastique (13) conjointement avec le cache d'amortisseur pneumatique (2) et le piston d'amortisseur pneumatique (3), l'amortisseur pneumatique (1) comportant une sécurité de transport (18, 19, 20) intégrée, amovible, fixant le cache d'amortisseur pneumatique (2) contre le piston d'amortisseur pneumatique (3), **caractérisé en ce que** la sécurité de transport (18, 19, 20) est réalisée sous la forme d'une liaison amovible, de type à baïonnette.

3. Amortisseur pneumatique (1) avec au moins les composants suivants, notamment un soufflet d'amortisseur pneumatique (4) en matière élastomère, un cache d'amortisseur pneumatique (2), un piston d'amortisseur pneumatique (3) et un guide externe (5) en forme de fourreau, contenant tangentiellement le soufflet d'amortisseur pneumatique (4), le soufflet d'amortisseur pneumatique (4) étant fixé de façon étanche à l'air au cache d'amortisseur pneumatique (2) avec sa première extrémité et au piston d'amortisseur pneumatique (3) avec sa deuxième extrémité et formant une chambre creuse de volume élastique (13) conjointement avec le cache d'amortisseur pneumatique (2) et le piston d'amortisseur pneumatique (3), l'amortisseur pneumatique (1) comportant une sécurité de transport (18, 19, 20) intégrée, amovible, fixant le cache d'amortisseur pneumatique (2) contre le piston d'amortisseur pneumatique (3), **caractérisé en ce que** la sécurité de transport (18, 19, 20) est réalisée sous la forme d'un siège conique amovible autobloquant.

4. Amortisseur pneumatique (1) avec au moins les composants suivants, notamment un soufflet d'amortisseur pneumatique (4) en matière élastomère, un cache d'amortisseur pneumatique (2), un piston d'amortisseur pneumatique (3) et un guide externe (5) en forme de fourreau, contenant tangentiellement le soufflet d'amortisseur pneumatique (4), le soufflet d'amortisseur pneumatique (4) étant fixé de façon étanche à l'air au cache d'amortisseur pneumatique (2) avec sa première extrémité et au piston d'amortisseur pneumatique (3) avec sa deuxième extrémité et formant une chambre creuse de volume élastique (13) conjointement avec le cache d'amortisseur pneumatique (2) et le piston d'amortisseur pneumatique (3), l'amortisseur pneumatique (1) comportant une sécurité de transport (18, 19, 20) intégrée, amovible, fixant le cache d'amortisseur pneumatique (2) contre le piston d'amortisseur pneumatique (3), **caractérisé en ce que** la sécurité de transport (18, 19, 20) est réalisée sous la forme d'une liaison aimantée.

5. Amortisseur pneumatique selon au moins l'une quelconque des revendications précédentes, **caractérisé en ce que** le cache d'amortisseur pneumatique (2) est réalisé à partir de deux parties (7, 8), la première partie (7) étant associée au soufflet d'amortisseur pneumatique (4) et la deuxième partie (8) présentant une forme correspondante à la première partie étant reliée fixement à la première partie (7) au moyen d'une couche (9) en matière élastomère, de préférence en caoutchouc.
